# EUROPÄISCHE PATENTANMELDUNG

(11) **EP 4 706 356 A1**
(43) Veröffentlichungstag der Anmeldung: **11.03.2026**
(21) Anmeldenummer: 25186731.3
(22) Anmeldetag: 01.07.2025
(51) Int. Cl.: A01B 29/04, A01B 63/10, A01B 63/22, B60T 8/18

(54) **LANDWIRTSCHAFTLICHES ARBEITSGERÄT**

(30) Priorität: 06.09.2024 DE 102024125564
(71) Anmelder: Amazonen-Werke H. Dreyer SE & Co. KG, 49205 Hasbergen (DE)
(72) Erfinder: Bruns, Nicolas, 49205 Hasbergen-Gaste (DE); STIER, Roy, 26121 Oldenburg (DE)
(74) Vertreter: Heisel, Per-Christian

(57) **Zusammenfassung**

Landwirtschaftliches Arbeitsgerät (1), umfassend wenigstens ein Fahrwerk (20), mittels welchem das Arbeitsgerät (1) in unterschiedlichen Betriebsstellungen und in abrollbarer Weise auf einem Untergrund wie einer Straße und einer landwirtschaftlichen Nutzfläche, insbesondere einem Acker, bewegbar und/oder abgestützt ist, wobei dem Fahrwerk (20) wenigstens ein mit fluidischen Druck, insbesondere einem Fluid, beaufschlagbarer Bremskreis (40) zugeordnet ist, mittels welchem wenigstens ein von mehreren dem Fahrwerk (20) zugeordneten Rad- und/oder Walzenelementen (21-24) abbremsbar sind, und wobei dem Fahrwerk (20) ein oder mehrere Feder- und/oder Stelleinrichtungen (30) zugeordnet sind, mittels welcher oder welchen eine über das Fahrwerk (20), insbesondere über wenigstens ein Rad- und/oder Walzenelement (21-24), auf den Untergrund übertragbare Last (A), insbesondere Aufstandskraft, einstellbar und/oder anpassbar ist. Um ein landwirtschaftliches Arbeitsgerät (1) anzugeben, welches kostengünstig und materialsparend herstellbar ist sowie für hohe maximale Lasten geeignet ist, ist vorgesehen, dass die eine oder mehreren Feder-und/oder Stelleinrichtungen (30) in fluidleitender Weise mit dem wenigstens einen Bremskreis (40) koppelbar sind.

## Beschreibung

Die Erfindung betrifft ein landwirtschaftliches Arbeitsgerät gemäß dem Oberbegriff des Patentanspruches 1.

Auf dem Gebiet der Landwirtschaft werden derartige Arbeitsgeräte zur Bearbeitung von landwirtschaftlichen Nutzflächen, insbesondere zum Ausbringen von Verteilgut und/oder zur Bodenbearbeitung, eingesetzt. Gattungsgemäße Arbeitsgeräte sind dazu in der Regel in unterschiedlichen Betriebsstellungen betreibbar. Insbesondere ist dabei eine abgesenkte und/oder ausgeklappte Arbeitsstellung für den Betrieb auf der Nutzfläche und eine angehobene und/oder eingeklappte Transportstellung für den Betrieb oder den Transport auf einer öffentlichen Straße vorgesehen.

Ein solches Arbeitsgerät ist beispielsweise in der Druckschrift WO 2023/138737 A1 beschrieben. Demnach weisen derartige landwirtschaftlichen Arbeitsgeräte wenigstens ein Fahrwerk auf, mittels welchem ein solches Arbeitsgerät in abrollbarer Weise auf einem Untergrund wie einer Straße und einer landwirtschaftlichen Nutzfläche, insbesondere einem Acker, bewegbar und/oder abgestützt ist. Das Fahrwerk ist dabei insbesondere auch zum Bearbeiten, beispielsweise zur Rückverfestigung, der Nutzfläche bzw. des Ackerbodens vorgesehen. Dem zumindest einen Fahrwerk ist wenigstens ein mit fluidischem Druck, insbesondere einem Fluid, beaufschlagbarer Bremskreis zugeordnet. Der wenigstens eine Bremskreis ist dabei derart ausgeführt und dazu eingerichtet, zumindest ein von mehreren dem Fahrwerk zugeordneten Rad- und/oder Walzenelementen abzubremsen. Darüber hinaus sind dem Fahrwerk ein oder mehrere Feder- und/oder Stelleinrichtungen zugeordnet, mittels welchem oder welchen eine über das Fahrwerk, insbesondere über wenigstens ein Rad- und/oder Walzenelement, auf den Untergrund übertragbare Last, insbesondere Aufstandskraft, einstellbar und/oder anpassbar ist.

Auch wenn sich solche Arbeitsgeräte grundsätzlich bewährt haben, besteht in der landwirtschaftlichen Praxis häufig das Problem, dass derartige Arbeitsgeräte aufgrund der Einhaltung zulässiger Lasten, wie beispielsweise in der Verordnung (EU) 2015/208 definiert, im öffentlichen Straßenverkehr einerseits von der Größe und/oder dem Gewicht eingeschränkt und/oder andererseits in den entsprechenden Ausführungen kostspielig sind.

Ferner hat das in der WO 2023/138737 A1 beschriebene Arbeitsgerät insbesondere den Nachteil, dass zumindest einige Teile des Fahrwerks, nur in Arbeitsstellung und/oder nur während des Betriebs wenigstens eines zusätzlich angetriebenen Aggregates, hier beispielsweise eines Gebläses, zum Übertragen von Lasten, insbesondere einer Aufstandskraft, eingerichtet und/oder geeignet sind.

Vor diesem Hintergrund stellt sich die Erfindung die Aufgabe, ein landwirtschaftliches Arbeitsgerät anzugeben, welches kostengünstig und materialsparend herstellbar ist sowie für hohe maximale Lasten, insbesondere für hohe zulässige Achslasten, geeignet ist. Ferner stellt sich die Erfindung insbesondere die Aufgabe, ein landwirtschaftliches Arbeitsgerät anzugeben, bei dem in besonders einfacher Weise ein größerer Teil des Fahrwerks auch während der Transportstellung zur Übertragung von Lasten verwendbar ist.

Diese Aufgabe wird erfindungsgemäß dadurch gelöst, dass die eine oder mehreren Feder- und/oder Stelleinrichtungen in fluidleitender Weise mit dem wenigstens einen Bremskreis koppelbar sind.

In Folge dieser Maßnahme sind die eine oder mehreren Feder- und/oder Stelleinrichtungen und der wenigstens eine Bremskreis bevorzugt mit derselben Druckquelle verbindbar und/oder verbunden. Mit anderen Worten sind vorzugsweise die eine oder mehreren Feder- und/oder Stelleinrichtungen und der wenigstens eine Bremskreis, insbesondere die Bremseinrichtungen bzw. Bremsen des Arbeitsgeräts, mit derselben Druckquelle, welche am Arbeitsgerät und/oder an einer zugeordneten Zugmaschine angeordnet ist, betreibbar. Eine derartige Ausführungsform hat den entscheidenden Vorteil, dass für die eine oder mehreren Feder- und/oder Stelleinrichtungen vorzugsweise keine weitere bzw. zusätzliche Druckquelle und/oder kein weiteres oder zusätzlich betreibbares Aggregat erforderlich ist. Ferner ist hierbei vorteilhaft, dass der wenigstens eine Bremskreis während des (Fahr-)Betriebs, insbesondere sowohl in Arbeitsstellung als auch in Transportstellung, des Arbeitsgeräts mit Druck beaufschlagt ist und die eine oder mehreren Feder- und/oder Stelleinrichtungen somit besonders bevorzugt während des gesamten Betriebs, insbesondere in den unterschiedlichen Stellungen des Arbeitsgeräts, verwendbar und/oder belastbar sind.

Unter dem Begriff "Druck" oder "fluidischer Druck" ist nachfolgend vorzugsweise ein mit definiertem Druck beaufschlagtes Medium nach Art eines Fluids, wie beispielsweise Hydrauliköl, Druckluft oder dergleichen, zu verstehen. Alternativ oder zusätzlich sind für das Fluid auch andere Arten von gasförmigen oder flüssigen Medien denkbar, welche dazu geeignet sind einen Druck zu übertragen. Der Druck bzw. der fluidische Druck kann dabei ferner von wenigstens einer der Zugmaschine und/oder dem Arbeitsgerät zugeordneten Druckquelle, wie beispielsweise einer Pumpe, einem Gebläse und/oder einem Kompressor, bereitstellbar sein. Insbesondere kann dabei eine Druckquelle nach Art einer Hydraulikpumpe vorgesehen sein. Die Druckquelle ist vorzugsweise nach Art einer Druckerzeugungseinrichtung ausgebildet und/oder dazu eingerichtet, den Druck eines in die Druckerzeugungseinrichtung einleitbaren und/oder eingeleiteten Fluids zu erhöhen. Alternativ oder zusätzlich kann der Druck und/oder das unter Druck stehende Fluid auch aus wenigstens einem der Zugmaschine und/oder dem Arbeitsgerät zugeordneten und mit definiertem Druck beaufschlagten Reservoir oder Druckspeicher, wie beispielsweise einem Hydraulikölspeicher und/oder einem Druckluftspeicher, bereitstellbar sein. Ferner kann der Druck alternativ oder zusätzlich durch ein der Zugmaschine zugeordnetes hydraulisches und/oder pneumatisches Steuergerät, insbesondere an welches das Arbeitsgerät in fluidleitender Weise ankuppelbar ist, bereitgestellt werden. Darüber hinaus kann alternativ oder zusätzlich vorgesehen sein, dass sich der Druck bzw. der fluidische Druck an und/oder innerhalb der einen oder mehreren Stelleinrichtungen und dem wenigstens einen Bremskreis unterscheidet bzw. unterschiedlich hoch einstellbar und/oder eingestellt ist. Besonders bevorzugt kann unter dem Begriff "Druck" oder "fluidischer Druck" nachfolgend ein Bremsdruck oder Bremsdrücke verstanden werden.

Ferner ist unter dem Begriff "Bremskreis" vorzugsweise wenigstens ein hydraulisches und/oder pneumatisches Leitungssystem zu verstehen, welches, insbesondere mittels wenigstens einer Druckquelle, mit Druck bzw. fluidischem Druck beaufschlagbar ist. Außerdem kann darunter auch wenigstens ein mit definiertem Druck beaufschlagter Druckkreis, beispielsweise Hydraulikkreis und/oder Druckluftkreis, verstanden werden, welcher vorzugsweise wenigstens eine mit Druck beaufschlagte und/oder beaufschlagbare Ringleitung und/oder Stichleitung umfasst. Ferner bevorzugt kann unter dem Bremskreis auch ein Einkreisbremssystem bzw. ein Einleitungsbremssystem und/oder ein Zweikreisbremssystem bzw. ein Zweileitungsbremssystem verstanden werden. Insbesondere ist vorgesehen, dass mittels des wenigstens einen Bremskreises der jeweilige Druck zum Abbremsen des Arbeitsgeräts bereitstellbar ist. Des Weiteren kann vorgesehen sein, dass der Druck in bedarfsgerechter Weise bereitstellbar ist. Bevorzugt ist mittels des wenigstens einen Bremskreises zumindest eine dem Arbeitsgerät, insbesondere den Rad- und/oder Walzenelementen, zugeordnete Bremseinrichtung mit Druck beaufschlagbar und/oder betreibbar. Darüber hinaus kann dem wenigstens einen Bremskreis insbesondere zumindest ein Anhängerbremsventil und/oder zumindest ein, vorzugsweise in Abhängigkeit einer Maschinenkonfiguration und/oder eines Maschinenfüllstandes einstellbares, Bremskraftregelventil (häufig ALB genannt) zugeordnet und/oder vorgeschaltet sein.

Das Arbeitsgerät ist vorzugsweise als anhängbare Verteilmaschine, insbesondere als Sämaschine und/oder als Streugerät, ausgebildet. Ferner ist das Arbeitsgerät bevorzugt als ein anhängbares Bodenbearbeitungsgerät oder Pflanzenbehandlungsgerät, wie etwa ein Hackgerät oder eine Feldspritze, ausgebildet. Das Arbeitsgerät ist besonders bevorzugt derart ausgebildet, von einer landwirtschaftlichen Zugmaschine, wie beispielsweise einem Traktor und/oder einem autonomen Zuggerät, gezogen zu werden. Des Weiteren ist das Arbeitsgerät, insbesondere Fahrwerk, vorzugsweise einachsig oder mehrachsig, beispielsweise zweiachsig oder dreiachsig, ausgeführt und bevorzugt dazu eingerichtet, über mehrere den jeweiligen Achsen und dem wenigstens einen Fahrwerk des Arbeitsgeräts zugeordneten Rad- und/oder Walzenelementen auf einer Straße und/oder einer Nutzfläche abzurollen.

Darüber hinaus ist vorzugsweise vorgesehen, dass das wenigstens eine Fahrwerk des Arbeitsgeräts unterteilt ist und je nach Betriebsstellung des Arbeitsgeräts in unterschiedlicher Weise zur Übertragung einer Last, insbesondere Aufstandskraft, vorgesehen ist. Ferner bevorzugt kann vorgesehen sein, dass die Last, insbesondere Aufstandskraft, in der Arbeitsstellung über einen größeren Teil des Fahrwerks auf den Untergrund übertragbar ist als in der Transportstellung. Das Fahrwerk kann je nach Ausführung rein für den Transport und/oder zum Abrollen des Arbeitsgeräts auf einem Untergrund und/oder zumindest teilweise als Bodenbearbeitungswerkzeug nutzbar sein. Bevorzugt ist das Fahrwerk, insbesondere mittels wenigstens einem Teil der zugeordneten Rad- und/oder Walzenelemente, zumindest teilweise nach Art eines in an sich bekannter Weise als Bodenbearbeitungswerkzeug ausgebildeten und/oder einsetzbaren Reifen- und/oder Walzenpackers ausgebildet. Je nach Ausführung können die Rad- und/oder Walzenelemente dabei bevorzugt ein oder mehrere Räder und/oder Reifen und/oder Walzen oder dergleichen umfassen. Ferner kann dabei auch vorgesehen sein, dass die Reifen auf und/oder zwischen einzelnen Walzensegmenten angeordnet und/oder aufgespannt sind.

Die Last, insbesondere Aufstandskraft, kann hierbei insbesondere aus einem aktuellen Gewicht des Arbeitsgeräts resultieren. Ferner kann sich das Gewicht insbesondere aus dem Leergewicht und dem aktuellen Füll- und/oder Beladungsgewicht, welches beispielsweise von einem Füllstand und/oder einer Ausrüstung des Arbeitsgeräts abhängig ist, resultieren.

Die ein oder mehreren Feder- und/oder Stelleinrichtungen sind bevorzugt an einem Rahmen des Arbeitsgerätes und/oder besonders bevorzugt am Fahrwerk, insbesondere zwischen Rahmen und Fahrwerk, angeordnet. Ferner bevorzugt können die eine oder mehreren Feder- und/oder Stelleinrichtungen in einer dem Fahrwerk zugeordneten Weise mit wenigstens einem oder mehreren Rad- und/oder Walzenelementen gekoppelt sein. Die eine oder mehreren Feder- und/oder Stelleinrichtungen umfassen vorzugsweise wenigstens eine Dämpfereinrichtung, welche bevorzugt nach Art eines Stoßdämpfers oder einer Luftfederung ausgebildet ist. Ferner kann hierbei alternativ oder zusätzlich eine Gasdruckfeder oder dergleichen vorgesehen sein. Des Weiteren sind die eine oder mehreren Feder- und/oder Stelleinrichtungen vorzugsweise zumindest teilweise kompressibel ausgebildet und/oder dazu eingerichtet, eine in das Fahrwerk, insbesondere in wenigstens ein Rad- und/oder Walzenelement, eingeleitete Kraft, wie beispielsweise eine Stoßkraft oder dergleichen, zumindest teilweise aufzunehmen, zu kompensieren und/oder zu übertragen. Alternativ oder zusätzlich können die eine oder mehreren Feder- und/oder Stelleinrichtungen zumindest teilweise längenverstellbar ausgebildet sein. Ferner können die eine oder mehreren Feder- und/oder Stelleinrichtungen oder wenigstens eine von mehreren Feder- und/oder Stelleinrichtungen zumindest einen Stellzylinder, insbesondere Hydraulikzylinder und/oder Pneumatikzylinder, umfassen. Der Stellzylinder ist dabei vorzugsweise als einfachwirkender Zylinder ausgebildet. Alternativ oder zusätzlich kann der Stellzylinder auch doppelwirkend und/oder nach Art eines Differentialzylinders, Gleichlaufzylinders, Teleskopzylinders oder eines Tandemzylinders ausgebildet sein. Besonders bevorzugt können die eine oder mehreren Feder- und/oder Stelleinrichtungen dazu eingerichtet sein, die von wenigstens einem Rad- und/oder Walzenelement übertragbare Last, insbesondere Aufstandskraft und/oder eine maximal übertragbare Last oder Aufstandskraft, einzustellen und/oder zu begrenzen und/oder anzupassen. Darüber hinaus kann alternativ oder zusätzlich auch vorgesehen sein, dass wenigstens einer von mehreren oder ein Teil von mehreren oder alle Feder- und/oder Stelleinrichtungen fluidleitend mit dem Bremskreis verbindbar und/oder verbunden sind.

In einer bevorzugten Ausführungsform des erfindungsgemäßen Arbeitsgeräts sind die eine oder mehreren Feder- und/oder Stelleinrichtungen gegenüber dem wenigstens einen Bremskreis mit demselben oder einem anderen fluidischen Druck, insbesondere Fluid, beaufschlagbar. Der Druck und/oder das Fluid für die eine oder mehreren Feder- und/oder Stelleinrichtungen und dem wenigstens einen Bremskreis wird dabei vorzugsweise von derselben Druckquelle generiert und/oder bereitgestellt. Ferner kann vorzugsweise vorgesehen sein, dass sowohl an der einen oder den mehreren Feder- und/oder Stelleinrichtungen und dem wenigstens einen Bremskreis vom Betrag der gleiche Druck ansteht und/oder anliegt. Eine derartige Ausführungsform ist vom Aufbau besonders einfach ausgebildet sowie kostengünstig herstellbar. Alternativ oder zusätzlich kann vorgesehen sein, dass zwischen dem einen oder den mehreren Feder- und/oder Stelleinrichtungen und dem wenigstens einen Bremskreis vom Betrag unterschiedliche Drücke, insbesondere desselben Fluids, anstehen, anliegen und/oder einstellbar sind. Bei einer derartigen Ausführungsform ist der jeweilige Druck flexibel an den jeweiligen Bedarf der einen oder den mehreren Feder- und/oder Stelleinrichtungen und den wenigstes einen Bremskreis bereitstellbar.

In einer Weiterbildung des erfindungsgemäßen Arbeitsgeräts weisen die eine oder mehreren Feder- und/oder Stelleinrichtungen wenigstens einen Auslass auf, über welchen der fluidische Druck, insbesondere das Fluid, aus der einen oder den mehreren Feder- und/oder Stelleinrichtungen zumindest teilweise und zumindest nahezu unmittelbar in die Umgebung ausleitbar und/oder ablassbar ist. Der wenigstens eine Auslass ist hierbei vorzugsweise an einem oder mehreren Feder- und/oder Stelleinrichtungen ausgebildet. Alternativ oder zusätzlich kann der wenigstens eine Auslass auch von mehreren oder allen Feder- und/oder Stelleinrichtungen gemeinsam nutzbar sein. Ferner kann der wenigstens eine Auslass alternativ oder zusätzlich entlang des wenigstens einen Bremskreises angeordnet, beispielsweise dem einen oder den mehreren Feder- und/oder Stelleinrichtungen vorgeschaltet und/oder nachgeschaltet, sein. Bevorzugt ist der wenigstens eine Auslass dazu eingerichtet, den Druck, insbesondere das Fluid und/oder bei Bedarf, aus dem einen oder den mehreren Feder- und/oder Stelleinrichtungen zumindest teilweise an die Umgebung abzulassen und/oder vom Betrag zu begrenzen. Ferner ist der Auslass bevorzugt dazu eingerichtet, den Druck, insbesondere das Fluid, bei einer Belastung und/oder Komprimierung wenigstens einer Feder- und/oder Stelleinrichtung und/oder bei einer Einleitung einer Kraft, beispielsweise Aufgrund von Lastübertragungen des Fahrwerks und/oder wenigstens eines Rad- und/oder Walzenelementes, zumindest teilweise an die Umgebung abzulassen und/oder vom Betrag zu begrenzen. Insbesondere kann der wenigstens eine Auslass zum Ablassen von Druck und/oder des Fluids aus der wenigstens einen Feder- und/oder Stelleinrichtung beim vertikalen Bewegen und/oder Einfedern des Fahrwerks, insbesondere wenigstens eines Rad- und/oder Walzenelementes, vorgesehen sein. Alternativ oder zusätzlich kann der wenigstens eine Auslass, insbesondere zum Anpassen einer Federhärte der einen oder mehreren Feder- und/oder Stelleinrichtungen, einstellbar sein.

Darüber hinaus ist vorzugsweise vorgesehen, dass an mehreren oder allen Feder- und/oder Stelleinrichtung wenigstens ein Auslass ausgebildet und/oder angeordnet ist. Diese Ausführungsform erlaubt einen besonders einfachen und kostengünstigen Aufbau des landwirtschaftlichen Arbeitsgeräts.

In einer anderen bevorzugten Ausführungsform des erfindungsgemäßen Arbeitsgeräts weisen die eine oder mehreren Feder- und/oder Stelleinrichtungen wenigstens einen fluidischen Rücklauf auf, über welchen der fluidische Druck, insbesondere das Fluid, aus der einen oder den mehreren Feder- und/oder Stelleinrichtungen zumindest teilweise in Richtung des wenigstens einen Bremskreises, insbesondere einer gemeinsamen Druckquelle und/oder einem Reservoir, zurückleitbar ist. Vorzugsweise umfasst der wenigstens eine Bremskreis, insbesondere das Leitungssystem, wenigsten einen derartigen Rücklauf, welcher der einen oder den mehreren Feder- und/oder Stelleinrichtungen zugeordnet ist. Insbesondere ist hierbei vorgesehen, dass die eine oder mehreren Feder- und/oder Stelleinrichtungen über wenigstens eine abgehenden und/oder mit Druck beaufschlagbare Rücklaufleitung mit dem wenigstens einen Bremskreis und/oder der Druckquelle und/oder einem Reservoir, wie einem Tank und/oder einem Druckspeicher, verbindbar und/oder verbunden sind. Alternativ oder zusätzlich ist wenigstens eine mit der einen oder den mehreren Feder- und/oder Stelleinrichtungen verbindbare und/oder verbundene Druckbeaufschlagungs- und/oder Einfüllleitung vorgesehen, über welche der Druck und/oder das Fluid von der Druckquelle zu der einen oder den mehreren Feder- und/oder Stelleinrichtungen zuleitbar ist und welche besonders bevorzugt mit der Rucklaufleitung zumindest abschnittsweise eine Ringleitung bildet. Mit einer derartigen Ausführungsform ist ein Arbeitsgerät mit besonders hoher Betriebssicherheit geschaffen.

In einer anderen Weiterbildung des erfindungsgemäßen Arbeitsgeräts ist der einen oder den mehreren Feder- und/oder Stelleinrichtungen wenigstens eine Druckanpassungseinrichtung, insbesondere ein Druckbegrenzungsventil, vorgeschaltet oder nachgeschaltet, mittels welcher der fluidische Druck in der einen oder den mehreren Feder- und/oder Stelleinrichtungen anpassbar, vorzugsweise begrenzbar, ist. Bevorzugt ist die Druckanpassungseinrichtung, insbesondere das Druckbegrenzungsventil, entlang des wenigstens einen Bremskreises, vorzugsweise entlang des Leitungssystems, beispielsweise entlang der Druckbeaufschlagungsleitung und/oder der Rücklaufleitung, angeordnet. Alternativ oder zusätzlich kann wenigstens eine Druckanpassungseinrichtung an zumindest einem Auslass der einen oder mehreren Feder- und/oder Stelleinrichtungen vorgesehen sein. Eine derartige Ausführungsform zeichnet sich insbesondere durch die Einfachheit im Aufbau aus.

In einer weiteren bevorzugten Ausführungsform des erfindungsgemäßen Arbeitsgeräts ist vor und/oder innerhalb des wenigstens einen Bremskreises wenigstens eine weitere oder andere Druckanpassungseinrichtung, insbesondere Druckbegrenzungsventil, angeordnet, mittels welcher der fluidische Druck im wenigstens einen Bremskreis anpassbar, vorzugsweise begrenzbar, ist. Bevorzugt ist die weitere oder andere Druckanpassungseinrichtung der Druckanpassungseinrichtung, welche dem einen oder den mehreren Feder- und/oder Stelleinrichtungen zugeordnet ist, vorgeschaltet und/oder nachgeschaltet. Mit anderen Worten ist hierbei bevorzugt eine mehrstufige Anpassung des Drucks, insbesondere des Fluids, innerhalb des Bremskreises ermöglicht, wobei der von der Druckquelle generierte und/oder bereitgestellte Druck in einer ersten Stufe von der weiteren oder anderen Druckanpassungseinrichtung und in einer anderen oder zweiten Stufe von der Druckanpassungseinrichtung der einen oder mehreren Feder- und/oder Stelleinrichtungen anpassbar ist. Alternativ oder zusätzlich kann die Reihenfolge der Stufen auch umgekehrt sein. Diese Ausführungsform ermöglicht eine besonders flexible Anpassung des Drucks innerhalb des Arbeitsgeräts.

In einer weiteren Weiterbildung des erfindungsgemäßen Arbeitsgeräts ist der fluidische Druck, insbesondere im wenigstens einen Bremskreis und/oder der einen oder den mehreren Feder- und/oder Stelleinrichtungen, in Abhängigkeit der Betriebsstellung und/oder eines Beladungszustandes des Arbeitsgeräts einstellbar und/oder anpassbar. Vorzugsweise ist hierbei vorgesehen, dass der Druck, insbesondere mittels der Druckquelle und/oder wenigstens einer Druckanpassungseinrichtung, an die Betriebsstellung und/oder des Beladungszustandes des Arbeitsgeräts anpassbar ist und/oder angepasst wird.

Ferner bevorzugt ist vorgesehen, dass der Druck, insbesondere in der einen oder den mehreren Feder- und/oder Stelleinrichtungen, in einer ersten Betriebsstellung des Arbeitsgeräts, beispielweise in einer Arbeitsstellung, gegenüber dem Druck in einer zweiten Betriebsstellung des Arbeitsgeräts, beispielweise in einer Transportstellung, erhöht ist. Alternativ oder zusätzlich kann auch vorgesehen sein, dass der Druck in der ersten Betriebsstellung gegenüber dem Druck in der zweiten Betriebsstellung reduziert ist. Darüber hinaus ist vorzugsweise vorgesehen, dass der Druck, insbesondere in der einen oder den mehreren Feder- und/oder Stelleinrichtungen, bei einem ersten Beladungszustandes des Arbeitsgeräts, beispielweise bei vollem oder halb vollem Vorratsbehälter, gegenüber dem Druck in einem zweiten Beladungszustandes des Arbeitsgeräts, beispielweise bei leerem oder halb leerem Vorratsbehälter, erhöht ist. Alternativ oder zusätzlich kann auch vorgesehen sein, dass der Druck bei dem ersten Beladungszustand gegenüber dem Druck im zweiten Beladungszustand reduziert ist. Ferner bevorzugt kann auch vorgesehen sein, dass der Druck, insbesondere mittels der Druckquelle und/oder der Druckanpassungseinrichtung, derart gesteuert und/oder geregelt wird, dass der Druck, insbesondere im wenigstens einen Bremskreis und/oder der einen oder den mehreren Feder- und/oder Stelleinrichtungen, in der ersten Betriebsstellung und/oder im ersten Beladungszustand und in der zweiten Betriebsstellung und/oder im zweiten Beladungszustand zumindest im Wesentlichen gleich und/oder konstant ist. Eine derartige Ausführungsform erlaubt eine besonders einfache Anpassung und/oder Regelung des Drucks innerhalb des Arbeitsgeräts an die jeweilige Betriebssituation.

Unter dem Beladungszustand ist sowohl vorstehend als auch nachstehend vorzugsweise der Füllstand wenigstens eines dem Arbeitsgerät zugeordneten Vorratsbehälters, insbesondere mit Verteilgut, zu verstehen. Alternativ oder zusätzlich ist unter dem Beladungszustand ein Beladungsgrad des Arbeitsgeräts mit wenigstens einem Betriebsstoff, welcher zum Betreiben des Arbeitsgeräts notwendig ist, zu verstehen. Ferner ist unter dem Beladungszustandes ein Beladungsgrad des Arbeitsgeräts mit anderen oder zusätzlich mitzuführenden und/oder mitgeführten Lasten zu verstehen. Ferner ist alternativ oder zusätzlich unter der Betriebsstellung sowohl vorstehend als auch nachstehend wenigstens eine Arbeits- und Transportstellung des Arbeitsgeräts zu verstehen. Insbesondere ist hierbei eine abgesenkte und/oder ausgeklappte Arbeitsstellung zu verstehen, in welcher das Arbeitsgerät in einer die Arbeitsgerätebreite in der Transportstellung überschreitenden Arbeitsbreite betreibbar ist und/oder Arbeitswerkzeuge des Arbeitsgeräts zur Nutzfläche hin zumindest teilweise abgesenkt sind und/oder sich im Eingriff mit der Nutzfläche befinden. Bevorzugt ist unter der Arbeitsstellung eine Stellung des Arbeitsgeräts zu verstehen, in welcher ein Rahmen und/oder Gestänge des Arbeitsgeräts zumindest teilweise ausgeklappt ist. Alternativ oder zusätzlich ist unter der Transportstellung eine Stellung des Arbeitsgeräts zu verstehen, in welcher das Arbeitsgerät in einer zusammengeklappten und/oder zumindest teilweise angehobenen Weise zum Transport auf der öffentlichen Straße betreibbar ist.

Darüber hinaus ist ein erfindungsgemäßes Arbeitsgerät bevorzugt, bei welchem die eine oder die mehreren Feder- und/oder Stelleinrichtungen nach Art eines Federbalges, vorzugsweise Luftfederbalges, ausgebildet sind und/oder wenigstens einen Federbalg, vorzugsweise Luftfederbalg, umfassen. Bevorzugt ist hierbei vorgesehen, dass der wenigstens eine Federbalg, vorzugsweise Luftfederbalg, über den wenigstens einen Bremskreis und/oder der gemeinsamen Druckquelle mit dem entsprechenden Druck, insbesondere Fluid, beaufschlagbar und/oder befüllbar ist. Der Federbalg kann alternativ oder zusätzlich auch mit einem anderen gasförmigen und/oder flüssigen Medium bzw. Fluid beaufschlagbar und/oder befüllbar sein. Der wenigstens eine Federbalg, vorzugsweise Luftfederbalg, ist vorzugsweise dem wenigstens einen Fahrwerk zugeordnet und/oder zwischen wenigstens einem Rahmen des Arbeitsgeräts und dem wenigstens einen Rad- und/oder Walzenelement angeordnet. Ferner ist bevorzugt, dass der wenigstens eine Federbalg, insbesondere Luftfederbalg, mit nur einem Teil des wenigstens einen Fahrwerks, insbesondere mit wenigstens einem Rad- und/oder Walzenelement, gekoppelt ist, während ein anderer Teil des wenigstens einen Fahrwerks, insbesondere wenigstens ein anderes Rad- und/oder Walzenelement, nicht über den Federbalg oder fest bzw. ungefedert innerhalb des Arbeitsgeräts angeordnet ist. Eine derartige Ausführungsform ist insbesondere hinsichtlich der Betriebssicherheit und/oder Einfachheit des Arbeitsgeräts besonders vorteilhaft.

Wie vorstehend bereits explizit hingewiesen, kann die eine oder die mehreren Feder- und/oder Stelleinrichtungen auch nach Art eines Stellzylinders ausgebildet sein und/oder wenigstens einen Stellzylinder umfassen. Ferner ist vorzugsweise auch vorstellbar, dass die eine oder die mehreren Feder- und/oder Stelleinrichtungen zumindest teilweise sowohl als Federbalg als auch Stellzylinder ausgebildet sind und/oder sowohl zumindest einen Federbalg als auch zumindest einen Stellzylinder umfassen. Ferner kann alternativ oder zusätzlich vorgesehen sein, dass der wenigstens eine Federbalg und der wenigstens eine Stellzylinder an unterschiedlichen Positionen innerhalb des Arbeitsgeräts und/oder an unterschiedlichen Teilen des Fahrwerks angeordnet und/oder positioniert sind.

In einer anderen bevorzugten Ausführungsform des erfindungsgemäßen Arbeitsgeräts ist das Fahrwerk unterteilt in wenigstens ein Hauptfahrwerk und wenigstens ein Hilfsfahrwerk. Das wenigstens eine Hauptfahrwerk besteht dabei aus wenigstens zwei, vorzugsweise zueinander in Fahrtrichtung versetzten, Hauptachsen, an denen jeweils wenigstens eines der Rad- und/oder Walzenelemente angeordnet ist. Das wenigstens eine Hilfsfahrwerk besteht ferner aus wenigstens einer, vorzugsweise zu den Hauptachsen in Fahrtrichtung versetzten Hilfsachse, an welcher wenigstens eines der Rad- und/oder Walzenelemente angeordnet ist. Bevorzugt ist ferner, dass die wenigstens eine Hilfsachse in Fahrtrichtung gesehen, vorzugsweise mittig, zwischen den wenigstens zwei Hauptachsen angeordnet ist und/oder seitlich zwischen den Hauptachsen eingeschlossen ist. Ferner bevorzugt kann das Hilfsfahrwerk mehrere Hilfsachsen umfassen, wobei wenigstens eine der mehreren Hilfsachsen in Fahrtrichtung gesehen seitlich nach außen hin bzw. in lateraler Richtung zu wenigstens einer der mehreren Hauptachsen angeordnet ist. Darüber hinaus ist vorzugsweise vorgesehen, dass die, insbesondere zwischen Arbeitsgerät und Untergrund resultierende, Last, insbesondere Aufstandskraft, je nach Betriebsstellung und/oder Beladungszustand des Arbeitsgeräts über eine unterschiedliche Anzahl an Hilfsachsen übertragbar ist und/oder übertragen wird. Bei einer derartigen Ausführungsform ist ein Arbeitsgerät geschaffen, welches je nach Betriebssituation eine optimale Lastübertragung zwischen Arbeitsgerät und Untergrund einerseits und eine besonders kompakte Abmessung, insbesondere mit hoher zulässiger Achslast, andererseits ermöglicht.

In einer bevorzugten Ausführungsform sind die wenigstens zwei Hauptachsen innerhalb des Arbeitsgeräts ortsfest und/oder versetzt zueinander in wenigstens zwei Achslinien angeordnet. Besonders bevorzugt sind die wenigstens zwei Achslinien zwischen 2 und 100 mm, insbesondere jedoch zwischen 5 und 50mm, versetzt zueinander angeordnet. Die wenigstens eine vorzugsweise mittig zwischen den Hauptachsen angeordnete Hilfsachse ist in Fahrtrichtung bevorzugt vor den wenigstens zwei Hauptachsen in einer dritten Achslinie angeordnet. In einer ebenso bevorzugten Ausführungsform ist die wenigstens eine, insbesondere mittig zwischen den wenigstens zwei Hauptachsen angeordnete, Hilfsachse mittels der einen oder mehreren Feder- und/oder Stelleinrichtungen, relativ zu einem Rahmen des Arbeitsgeräts und den Hauptachsen verstellbar und/oder federbar ausgeführt. Ferner bevorzugt sind die Hauptachsen dabei unverstellbar bzw. starr und/oder ungefedert innerhalb des Arbeitsgeräts angeordnet.

Bei einer besonders bevorzugten Ausführungsform des erfindungsgemäßen Arbeitsgeräts ist wenigstens einem Rad- und/oder Walzenelement, insbesondere des Hauptfahrwerks, zumindest eine erste Bremseinrichtung und wenigstens einem anderen Rad- und/oder Walzenelement, insbesondere des Hilfsfahrwerks, zumindest eine zweite Bremseinrichtung zugeordnet, wobei die erste und zweite Bremseinrichtung dazu eingerichtet sind, eine definierte und vom fluidischen Druck, insbesondere Fluid, im wenigstens einen Bremskreis abhängige Bremskraft in die jeweiligen Rad- und/oder Walzenelemente, insbesondere deren Achsen, einzuleiten und/oder zu beaufschlagen. Alternativ oder zusätzlich kann nur dem Hauptfahrwerk wenigstens eine Bremseinrichtung zugeordnet sein, wobei das Hilfsfahrwerk, insbesondere das wenigstens eine Rad- und/oder Walzenelement des Hilfsfahrwerks, ungebremst ist. Die wenigstens eine oder die mehreren Bremseinrichtungen sind vorzugsweise jeweils nach Art einer Scheibenbremse oder einer Trommelbremse ausgebildet. Eine derartige Ausführungsform ermöglicht eine besonders effiziente Abbremsung des Arbeitsgeräts, insbesondere mit besonders kurzem Bremsweg auf der Nutzfläche und/oder der öffentlichen Straße.

**In** einer besonders bevorzugten Weiterbildung des erfindungsgemäßen Arbeitsgeräts unterscheiden sich die Bremskräfte der ersten und zweiten Bremseinrichtung, vorzugsweise in wenigstens einer der mehreren Betriebsstellungen und/oder in Abhängigkeit des Beladungszustandes des Arbeitsgeräts. Insbesondere kann hierbei vorgesehen sein, dass die Bremskräfte und/oder Bremsdrücke der ersten Bremseinrichtung in einer ersten Betriebsstellung und/oder einem ersten Beladungszustand des Arbeitsgeräts größer sind als die Bremskräfte und/oder Bremsdrücke der ersten Bremseinrichtung in einer zweiten Betriebsstellung und/oder einem zweiten Beladungszustand des Arbeitsgeräts. Alternativ oder zusätzlich kann hierbei vorgesehen sein, dass die Bremskräfte und/oder Bremsdrücke der zweiten Bremseinrichtung in einer ersten Betriebsstellung und/oder einem ersten Beladungszustand des Arbeitsgeräts größer sind als die Bremskräfte und/oder Bremsdrücke der zweiten Bremseinrichtung in einer zweiten Betriebsstellung und/oder einem zweiten Beladungszustand des Arbeitsgeräts. Alternativ oder zusätzlich kann auch umgekehrt vorgesehen sein, dass die jeweiligen Bremskräfte und/oder Bremsdrücke der ersten und/oder zweiten Bremseinrichtung in einer ersten Betriebsstellung und/oder einem ersten Beladungszustand des Arbeitsgeräts niedriger sind als die jeweiligen Bremskräfte und/oder Bremsdrücke der ersten und/oder zweiten Bremseinrichtung in einer zweiten Betriebsstellung und/oder einem zweiten Beladungszustand des Arbeitsgeräts. Ferner kann alternativ oder zusätzlich vorgesehen sein, dass die Bremskraft und/oder der Bremsdruck der ersten Bremseinrichtung in den unterschiedlichen Betriebsstellungen und/oder Beladungszuständen zumindest im Wesentlichen konstant ist und die Bremskraft und/oder der Bremsdruck der zweiten Bremseinrichtung in den unterschiedlichen Betriebsstellungen und/oder Beladungszuständen anpassbar ist und/oder angepasst bzw. variiert wird. Bei einer derartigen Ausführungsform ist die Abbremsung des Arbeitsgeräts bedarfsgerecht an die jeweilige Betriebssituation anpassbar.

Bei einer weiteren besonders bevorzugten Ausführungsform des erfindungsgemäßen Arbeitsgeräts unterscheiden sich die übertragbaren Lasten, insbesondere Aufstandskräfte, des Hauptfahrwerks und Hilfsfahrwerks vorzugsweise in wenigstens einer der mehreren Betriebsstellungen und/oder vorzugsweise in Abhängigkeit des Beladungszustandes des Arbeitsgeräts. Insbesondere kann hierbei vorgesehen sein, dass die über das Hauptfahrwerk übertragbaren Lasten, insbesondere Aufstandskräfte, in einer ersten Betriebsstellung und/oder einem ersten Beladungszustand des Arbeitsgeräts größer sind als die über das Hauptfahrwerk übertragbaren Lasten, insbesondere Aufstandskräfte, in einer zweiten Betriebsstellung und/oder einem zweiten Beladungszustand des Arbeitsgeräts. Alternativ oder zusätzlich kann hierbei vorgesehen sein, dass die über das Hilfsfahrwerk übertragbaren Lasten, insbesondere Aufstandskräfte, in einer ersten Betriebsstellung und/oder einem ersten Beladungszustand des Arbeitsgeräts größer sind als die über das Hilfsfahrwerk übertragbaren Lasten, insbesondere Aufstandskräfte, in einer zweiten Betriebsstellung und/oder einem zweiten Beladungszustand des Arbeitsgeräts. Alternativ oder zusätzlich kann auch umgekehrt vorgesehen sein, dass die über das Hauptfahrwerk und/oder Hilfsfahrwerk übertragbaren Lasten, insbesondere Aufstandskräfte, in einer ersten Betriebsstellung und/oder einem ersten Beladungszustand des Arbeitsgeräts niedriger sind als die über das Hauptfahrwerk und/oder Hilfsfahrwerk übertragbaren Lasten, insbesondere Aufstandskräfte, in einer zweiten Betriebsstellung und/oder einem zweiten Beladungszustand des Arbeitsgeräts. Ferner kann alternativ oder zusätzlich vorgesehen sein, dass die über das Hauptfahrwerk übertragbaren Lasten, insbesondere Aufstandskräfte, in den unterschiedlichen Betriebsstellungen und/oder Beladungszuständen zumindest im Wesentlichen konstant sind und die über das Hilfsfahrwerk übertragbaren Lasten, insbesondere Aufstandskräfte, in den unterschiedlichen Betriebsstellungen und/oder Beladungszuständen anpassbar sind und/oder angepasst bzw. variiert werden. Des Weiteren ist vorzugsweise vorgesehen, dass das Hilfsfahrwerk dazu eingerichtet ist, eine Differenzaufstandskraft aufzunehmen, welche aus dem aktuellen Gewicht des Arbeitsgeräts und der vom Hauptfahrwerk aufgenommenen und/oder aufnehmbaren Aufstandskräfte resultiert. Ferner bevorzugt ist, insbesondere für das Hilfsfahrwerk eine 2-Punkteinstellung der zu übertragenden Lasten, insbesondere Aufstandskräfte, welche vorzugsweise zwischen "voll" und "leer" für einen ersten Beladungszustand bzw. Füllstand und einem zweiten Beladungszustand bzw. Füllstand auswählbar und/oder anpassbar ist. Bei einer derartigen Ausführungsform ist die Lastübertragung zwischen Arbeitsgerät und Untergrund in einfacher Weise bedarfsgerecht an die jeweilige Betriebssituation anpassbar.

In einer weiteren besonders bevorzugten Weiterbildung des erfindungsgemäßen Arbeitsgeräts ist die Bremskraft des Hilfsfahrwerks in Abhängigkeit der übertragbaren Lasten, insbesondere Aufstandskräfte, des Hilfsfahrwerks einstellbar und/oder anpassbar. Alternativ oder zusätzlich hierzu kann auch die Bremskraft des Hauptfahrwerks in Abhängigkeit der übertragbaren Lasten, insbesondere Aufstandskräfte, des Hauptfahrwerks einstellbar und/oder anpassbar sein. Besonders bevorzugt ist vorgesehen, dass umso größer die übertragbaren Lasten, insbesondere Aufstandskräfte, sind, desto größer wird die Bremskraft, insbesondere am Hilfsfahrwerk, eingestellt. Andersherum ist vorzugsweise ebenso vorgesehen, dass umso kleiner die übertragbaren Lasten, insbesondere Aufstandskräfte, sind, desto kleiner wird die Bremskraft, insbesondere am Hilfsfahrwerk, eingestellt. Mit anderen Worten ist besonders bevorzugt vorgesehen, dass die die Bremskraft bzw. Bremsdrücke des Hilfsfahrwerks in Abhängigkeit der übertragbaren Lasten, insbesondere Aufstandskräfte, des Hilfsfahrwerks einstellbar und/oder anpassbar sind und/oder eingestellt und/oder angepasst werden, während die Bremskraft bzw. Bremsdruck des Hauptfahrwerks zumindest im Wesentlichen unverändert und/oder konstant ist. Somit ist die Bremskraft noch bedarfsgerechter und/oder flexibler an die jeweiligen Betriebssituationen des Arbeitsgerätes anpassbar.

Darüber hinaus ist eine Ausführungsform besonders bevorzugt, bei welcher das Hilfsfahrwerk dazu eingerichtet ist, nur in einer oder einigen von mehreren Betriebsstellungen und/oder nur bei einem oder einigen von mehreren definierten Beladungszuständen eine Last, insbesondere Aufstandskraft, und/oder eine Bremskraft zu übertragen. Mit anderen Worten ist in einer bevorzugten Ausführungsform, dass wenigstens eine Hilfsfahrwerk, insbesondere dessen wenigstens eine Rad- und/oder Walzenelement, in wenigstens einer Betriebsstellung und/oder bei wenigstens einem Beladungszustand des Arbeitsgeräts zumindest nahezu lastfrei und/oder ungebremst mitlaufend verbringbar. Bei einer derartigen Ausführungsform ist ein besonders flexibler Einsatz des Fahrwerks in den jeweiligen Betriebssituationen erreicht.

Bei einer weiteren vorteilhaften Ausführungsform des erfindungsgemäßen Arbeitsgeräts ist eine Höhe und/oder Schwenklage des Fahrwerks, vorzugsweise des Hilfsfahrwerks mittels der einen oder mehreren Feder- und/oder Stelleinrichtungen anpassbar. Besonders bevorzugt ist die Höhe und/oder Schwenklage des Fahrwerks dabei in fernbetätigter Weise anpassbar. Vorzugsweise ist vorgesehen, dass über eine Anpassung der Höhe und/oder Schwenklage die Bodenfreiheit des Arbeitsgeräts, insbesondere die Höhe zwischen einem Rahmen des Arbeitsgeräts und dem Untergrund anpassbar ist. Alternativ oder zusätzlich kann vorgesehen sein, dass die eine oder mehreren Feder- und/oder Stelleinrichtungen dazu eingerichtet sind, das Fahrwerk, insbesondere das Hilfsfahrwerk und/oder wenigstens ein dem Hilfsfahrwerk zugeordnetes Rad- und/oder Walzenelement, auf einer einstellbaren und/oder definierten Höhe und/oder Schwenklage und/oder auf einem einstellbaren und/oder definierten Höhenbereich und/oder Schwenklagenbereich zu halten und/oder zu begrenzen. Insbesondere kann dabei vorgesehen sein, dass das Fahrwerk, insbesondere Hilfsfahrwerk und/oder wenigstens ein dem Hilfsfahrwerk zugeordnetes Rad- und/oder Walzenelement, innerhalb des definierten Höhenbereich und/oder Schwenklagenbereich vertikal beweglich ist bzw. innerhalb dieses Bereichs einfedern kann.

Alternativ oder zusätzlich kann die Höhe und/oder Schwenklage des Fahrwerks, insbesondere des Hilfsfahrwerks und/oder wenigstens ein dem Hilfsfahrwerk zugeordnetes Rad- und/oder Walzenelement, mittels wenigstens einer Begrenzungseinrichtung relativ zum Untergrund und/oder einem Rahmen des Arbeitsgeräts begrenzt sein. Die wenigstens eine Begrenzungseinrichtung kann dabei vorzugsweise zumindest einen ersten Anschlag, insbesondere Obenanschlag für eine maximale Höhe und/oder maximale Schwenklage, und/oder einen zweiten Anschlag, insbesondere Untenanschlag für eine minimale Höhe und/oder minimale Schwenklage, umfassen. Insbesondere ist dabei unter der maximalen Höhe und/oder maximalen Schwenklage eine, vorzugsweise zum Rahmen des Arbeitsgeräts hin, maximal eingeredete Position des Fahrwerks, insbesondere des Hilfsfahrwerks und/oder des wenigstens einen dem Hilfsfahrwerk zugeordneten Rad- und/oder Walzenelements, zu verstehen. Ferner ist dabei insbesondere unter der minimalen Höhe und/oder minimalen Schwenklage eine, vorzugsweise zum Rahmen des Arbeitsgeräts hin, minimal eingeredete Position des Fahrwerks, insbesondere des Hilfsfahrwerks und/oder des wenigstens einen dem Hilfsfahrwerk zugeordneten Rad- und/oder Walzenelements, zu verstehen.

In einer weiteren vorteilhaften Weiterbildung des erfindungsgemäßen Arbeitsgeräts sind die Rad- und/oder Walzenelemente in einer ausgeklappten und/oder abgesenkten Betriebsstellung, insbesondere Arbeitsstellung, des Arbeitsgeräts und für die Verwendung auf einer Nutzfläche, insbesondere einem Acker, quer zur Fahrtrichtung und zumindest im Wesentlichen nebeneinander derart angeordnet, dass die Rad- und/oder Walzenelemente ein Bodenbearbeitungsgerät bzw. Bodenbearbeitungswerkzeug, insbesondere eine Bodenwalze nach Art eines Reifenpackers, bilden. Bevorzugt umfasst das Hilfsfahrwerk dabei, insbesondere an einer Hilfsachse angeordnet, ein oder mehrere Rad- und/oder Walzenelemente welche in Fahrtrichtung gesehen zumindest in etwa mittig innerhalb des Arbeitsgeräts und/oder zwischen wenigstens zwei weiteren Rad- und/oder Walzenelementen, welche dem Hauptfahrwerk zugeordnet sind, angeordnet. Mit anderen Worten bildet das eine Rad- und/oder Walzenelement des Hilfsfahrwerks oder die mehreren Rad- und/oder Walzenelemente des Hilfsfahrwerks dabei wenigstens einen Reifen- und/oder Walzenpacker nach Art eines Mittelpackers. Ferner bevorzugt umfasst das Hilfsfahrwerks in Fahrtrichtung gesehen lateral nach außen zum Hauptfahrwerk gesehen zusätzliche Rad- und/oder Walzenelemente, welche besonders bevorzugt für die Arbeitsstellung ausklappbar und/oder absenkbar und/oder für die Transportstellung einklappbar und/oder anhebbar sind. Bei einer derartigen Ausführungsform ist das Fahrwerk, insbesondere Rad- und/oder Walzenelemente, vorzugsweise sowohl zum Abrollen und/oder Fortbewegen des Arbeitsgeräts als auch zur Bearbeitung der landwirtschaftlichen Nutzfläche vorgesehen. Das Fahrwerk des Arbeitsgeräts ist somit besonders vielseitig einsetzbar.

Weitere Einzelheiten der Erfindung sind der Beispielsbeschreibung und den Zeichnungen zu entnehmen. Die Zeichnungen zeigen
- Fig. 1: eine perspektivische Ansicht auf ein landwirtschaftliches Arbeitsgerät in einer Arbeitsstellung;
- Fig. 2: eine Seitenansicht auf einen vergrößerten Abschnitt eines Fahrwerks des landwirtschaftlichen Arbeitsgeräts aus Figur 1;
- Fig. 3: einen ersten schematischen Schaltplan für einen dem Fahrwerk zugeordneten Bremskreis des landwirtschaftlichen Arbeitsgeräts;
- Fig. 4A: ein erstes Ausführungsbeispiel für einen anderen oder weiteren Abschnitt des schematischen Schaltplans;
- Fig. 4B: ein zweites Ausführungsbeispiel für einen anderen oder weiteren Abschnitt des schematischen Schaltplans; und
- Fig. 5: eine Draufsicht auf einen vergrößerten Abschnitt des landwirtschaftlichen Arbeitsgeräts aus Figur 1.

**In** der nachfolgenden Beschreibung werden gleiche Bezugszeichen für gleiche Gegenstände verwendet.

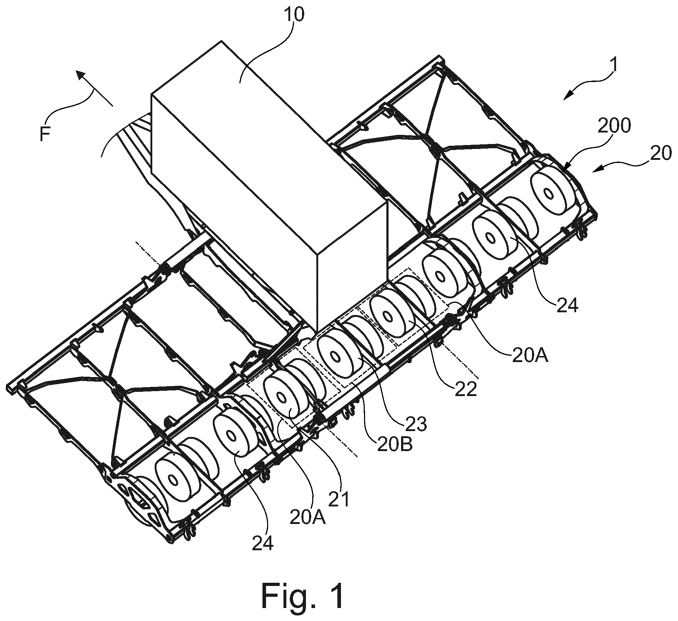

Figur 1 zeigt eine vereinfachte Perspektivansicht eines landwirtschaftlichen Arbeitsgeräts 1 in einer ersten Betriebsstellung, hier beispielhaft einer ausgeklappten Arbeitsstellung für den Betrieb auf einer landwirtschaftlichen Nutzfläche bzw. einem Ackerboden.

Genauer dargestellt zeigt Figur 1 ein landwirtschaftliches Arbeitsgerät 1 bzw. eine Verteilmaschine, hier nach Art einer Sämaschine, zum Ausbringen von Verteilgut, wie beispielsweise Saatgut und/oder Dünger, und zum Anhängen an eine nicht dargestellte Zugmaschine, wie beispielsweise einem Traktor.

An dieser Stelle sei explizit erwähnt, dass das Arbeitsgerät 1 auch nach anderen Arten gezogener, landwirtschaftlicher Arbeitsgeräte 1, wie beispielsweise einem Bodenbearbeitungsgerät, einem Düngerstreuer, einer Hacke oder einer Feldspritze ausgebildet sein kann.

Das landwirtschaftliche Arbeitsgerät 1 umfasst hierbei ferner ein Fahrwerk 20, mittels welchem das Arbeitsgerät 1, insbesondere in unterschiedlichen Betriebsstellungen und in Fahrtrichtung F, in abrollbarer Weise auf einem Untergrund wie einer öffentlichen Straße und der landwirtschaftlichen Nutzfläche, insbesondere einem Acker, Feldwegen etc., bewegbar und/oder abgestützt ist. Das Fahrwerk 20 weist ferner mehrere Rad- und/oder Walzenelemente 21-24 auf, welche hierbei beispielhaft nach Art von Reifen umfassenden Rädern ausgeführt sind.

Das in diesem Ausführungsbeispiel dargestellte Fahrwerk 20 ist insbesondere als Bodenwalze 200 nach Art eines Reifenpackers ausgeführt. Alternativ oder zusätzlich dazu wäre auch vorstellbar, dass das Fahrwerk 20 nach anderen Packerarten ausgeführt ist und/oder aus unterschiedlichen Arten von Packern, beispielsweise einem Reifenpacker und einem Walzenpacker, kombiniert zusammengesetzt ist. Ferner ist alternativ oder zusätzlich vorstellbar, dass das Fahrwerk 20 zumindest teilweise nur zum Abrollen und/oder Fortbewegen des Arbeitsgeräts 1 vorgesehen ist und/oder keine Funktionen eines landwirtschaftlichen Arbeitswerkzeugs umsetzen kann.

Der Einfachheit und Übersicht halber sind ausgenommen von einem Behälter 10 für das auszubringende Verteilgut und dem als Bodenwalze 200 ausgeführten Fahrwerk 20, alle weiteren optionalen Arbeitswerkzeuge, wie beispielsweise Schare oder dergleichen, ausgeblendet.

Ein derartiges Arbeitsgerät 1 kann darüber hinaus beispielsweise ein oder mehrere Materialablagevorrichtungen zum Ablegen des im Behälter 10 vorgehaltenen Verteilguts umfassen. Sofern das landwirtschaftliche Arbeitsgerät 1 nach Art einer pneumatischen Sämaschine ausgeführt ist, kann zwischen dem Behälter 10 und den nicht dargestellten Materialablagevorrichtungen ein pneumatisches Fördersystem vorgesehen sein, welches zum bedarfsgerechten Fördern des Verteilguts aus dem Behälter 10 zu den Materialablagevorrichtungen vorgesehen ist.

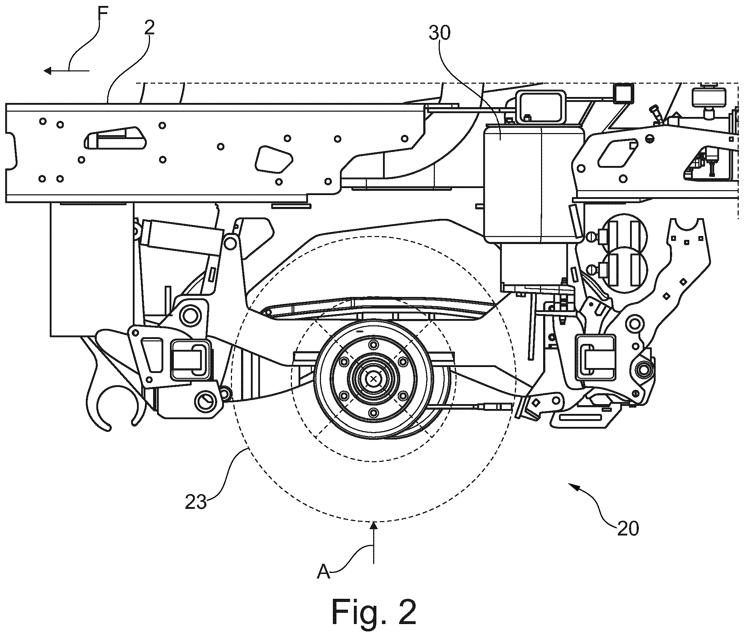

**In** der Figur 2 ist eine Seitenansicht auf einen vergrößerten Abschnitt des in Figur 1 dargestellten Fahrwerks 20 gezeigt. Hierbei ist ein Teil eines Rahmens 2 des Arbeitsgeräts 1 zu erkennen. Ferner ist zu sehen, dass dem Fahrwerk 20 ein oder mehrere Feder- und/oder Stelleinrichtungen 30 (hier nur eins von zwei zu sehen) zugeordnet sind. **In** der in Figur 2 gezeigten Blickrichtung können vor oder hinter der gezeigten Feder- und/oder Stelleinrichtung 30 noch weitere gleiche oder andere Feder- und/oder Stelleinrichtungen 30 angeordnet sein. Ferner können auch außerhalb des gezeigten Ausschnitts in Fahrtrichtung F gesehen vor und/oder hinter der gezeigten Feder- und/oder Stelleinrichtung 30 noch weitere gleiche oder andere Feder- und/oder Stelleinrichtungen 30 angeordnet sein. Darüber hinaus ist aber alternativ oder zusätzlich auch denkbar, dass dem Fahrwerk 20 nur eine einzige Feder- und/oder Stelleinrichtung 30 zugeordnet ist.

Die eine oder mehreren Feder- und/oder Stelleinrichtungen 30 sind dazu eingerichtet, eine über das Fahrwerk 20, insbesondere über wenigstens ein Rad- und/oder Walzenelement 21-24, auf den Untergrund übertragbare Last A, insbesondere Aufstandskraft, einzustellen und/oder anzupassen. Die in diesem Ausführungsbeispiel gezeigte Feder- und/oder Stelleinrichtung 30 ist nach Art eines Federbalges, insbesondere Luftfederbalges, ausgebildet. Alternativ oder zusätzlich dazu kann die Feder- und/oder Stelleinrichtung 30 einen oder mehrere Federbälge, insbesondere Luftfederbälge, umfassen. Ferner kann die eine oder mehreren Feder- und/oder Stelleinrichtungen 30 auch nach anderen Arten von Feder- und/oder Stelleinrichtungen ausgebildet sein und/oder andere Arten von Feder- und/oder Stelleinrichtungen umfassen. Beispielsweise wären alternativ oder zusätzlich auch Stellzylinder, wie z.B. Hydraulik- und/oder Pneumatikzylinder, und/oder Stoßdämpfer, wie z.B. Gasdruckfedern oder dergleichen, denkbar. Die eine oder mehreren Feder- und/oder Stelleinrichtungen 30 können damit quasi eine Art Luftfederung oder eine andere Art von Federungen für das Fahrwerk 20, insbesondere für wenigstens eines der Rad- und/oder Walzenelemente 21-24, bilden.

Die zwischen dem Fahrwerk 20 und/oder dem wenigstens einen Rad- und/oder Walzenelement 21-24 und dem Untergrund übertragbare Last A und/oder Aufstandskraft resultiert dabei im Wesentlichen aus einem aktuellen Gewicht und/oder der Betriebsstellung des Arbeitsgeräts 1. Das aktuelle Gewicht des Arbeitsgeräts 1 kann wiederrum alternativ oder zusätzlich von der Maschinenkonfiguration des Arbeitsgeräts 1 und/oder vom Beladungszustand, insbesondere Füllstand des Verteilguts im wenigstens einen Behälter 10, abhängen.

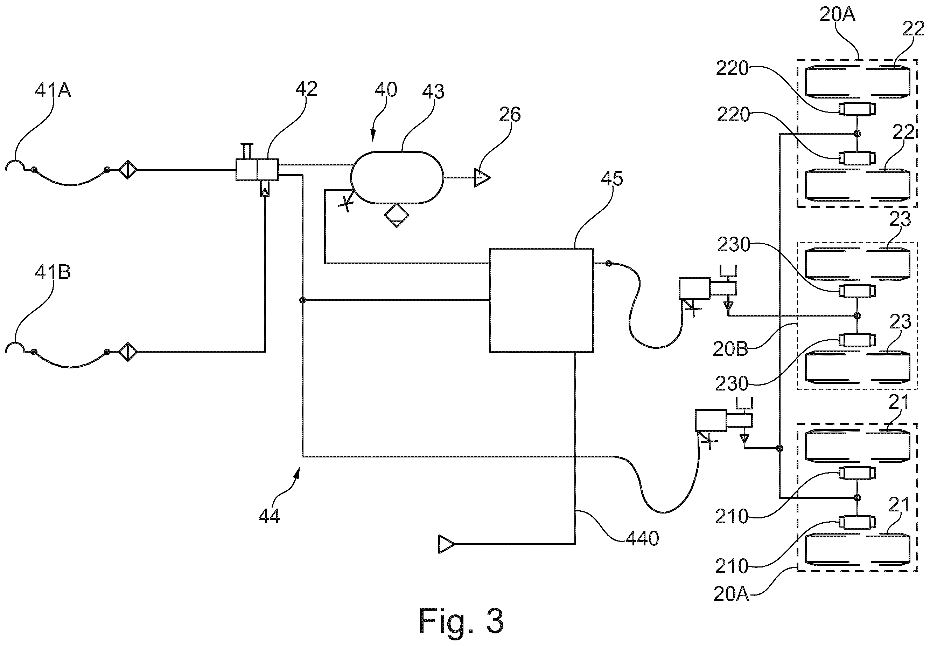

Die weitere und/oder nähere Beschreibung zum Aufbau des landwirtschaftlichen Arbeitsgeräts 1 wird nachfolgend anhand des in der Figur 3 gezeigten Schaltplans vorgenommen. Der hier gezeigte Schaltplan ist auf ein pneumatisches System gerichtet, welches insbesondere mittels Druckluft beaufschlagt und/oder betrieben wird. Es sei hierbei jedoch explizit erwähnt, dass das nachfolgend am vorliegenden Ausführungsbeispiel beschriebene System alternativ oder zusätzlich hydraulisch oder in anderer fluidisch betreibbarer Weise ausgeführt sein kann.

Wie anhand der Figur 3 gut zu erkennen ist, ist dem Fahrwerk 20 wenigstens ein mit fluidischen Druck, insbesondere mit einem Fluid (hier Druckluft), beaufschlagbarer Bremskreis 40 zugeordnet. Der Bremskreis 40 ist dazu vorgesehen, bei Bedarf, wenigstens eines der mehreren Rad- und/oder Walzenelemente 21-24 des Fahrwerks 20 abzubremsen, insbesondere mit einer entsprechenden Bremskraft zu beaufschlagen und/oder zu betätigen.

Der Bremskreis 40 ist zumindest im Wesentlichen entlang des landwirtschaftlichen Arbeitsgeräts 1 angeordnet und hier beispielhaft als Zweikreisbremssystem bzw. Zweileitungsbremssystem ausgebildet. Alternativ oder zusätzlich dazu könnte der Bremskreis 40 auch einen anderen Aufbau, wie beispielsweise eines Einkreisbremssystems bzw. ein Einleitungsbremssystems, aufweisen. Wie ferner auf der linken Seite des Schaltplans zu erkennen, weist der Bremskreis 40 mehrere Kupplungen 41A, 41B zum fluidleitenden Verbinden des Bremskreises 40 mit einem an der hier nicht gezeigten Zugmaschine zugeordneten Steuergerät auf, über welches der Bremskreis 40 fluidisch (hier pneumatisch) von der Zugmaschine versorgt wird. Alternativ oder zusätzlich dazu könnte der Bremskreis 40 auch an einem hydraulischen Steuergerät der Zugmaschine ankuppelbar sein. Ferner kann alternativ oder zusätzlich auch eine eigene am Arbeitsgerät 1 ausgebildete fluidische Versorgung vorgesehen sein, so dass sich das Arbeitsgerät 1 autark und/oder selbst mit dem entsprechenden Druck und/oder Fluid versorgt.

Stromabwärts der Kupplungen 41A, 41B ist ein Anhängerbremsventil 42 angeordnet, über welches der Druck und/oder das Fluid an ein daran nachgeschaltetes Leitungssystem 44 des Bremskreises 40 und/oder wenigstens eine Druckquelle 43 weitergeleitet und/oder zugeführt wird. Die wenigstens eine Druckquelle 43 ist hierbei nach Art eines als Druckspeicher ausgebildeten Reservoirs ausgeführt. Alternativ oder zusätzlich dazu kann das Reservoir auch nach Art eines Tanks, insbesondere Rücklauftanks oder dergleichen, ausgebildet sein. Ferner kann alternativ oder zusätzlich wenigstens eine weitere Druckquelle vorgesehen sein, welche insbesondere nach Art einer Druckerzeugungseinrichtung, wie beispielsweise einer Pumpe, einem Kompressor oder einem Gebläse, ausgeführt ist. Darüber hinaus kann die wenigstens eine Druckquelle 43 oder weitere Druckquelle alternativ oder zusätzlich am Arbeitsgerät 1 und/oder auf der Zugmaschine angeordnet sein.

Die hier als Druckspeicher ausgeführte Druckquelle 43 ist mit einem definiertem Druck des Fluids beaufschlagt.

Auf der rechten Seite des Schaltplans sind die jeweiligen Rad- und/oder Walzenelemente 21-23 des Fahrwerks 20 schematisch angedeutet. An den Rad- und/oder Walzenelementen 21-23 sind ferner über den Bremskreis 40 beaufschlagbare Bremseinrichtungen 210-230 zu erkennen. Die Bremseinrichtungen 210-230 sind dazu eingerichtet, in Abhängigkeit des insbesondere über das Leitungssystem 44 und/oder die Druckquelle 43 zugeleiteten, Drucks bzw. des Fluids die jeweiligen Rad- und/oder Walzenelemente 21-23 mit einer Bremskraft zu beaufschlagen und/oder abzubremsen. Die Bremseinrichtungen 210-230 können dabei ferner je nach Ausführung beispielsweise nach Art von Scheibenbremsen oder Trommelbremsen oder anderen Arten druckbeaufschlagter Bremsen ausgeführt sein.

Wie außerdem zu erkennen, ist einem mittleren Teil des Fahrwerks 20, insbesondere den mittleren Rad- und/oder Walzenelementen 23, wenigstens eine Druckanpassungseinrichtung 45 vorgeschaltet. Die hier gezeigte Druckanpassungseinrichtung 45 ist ferner alternativ oder zusätzlich als Bremskraftregler ausgeführt. Alternativ oder zusätzlich kann die Druckanpassungseinrichtung 45 auch nach Art eines, insbesondere einstellbaren, Druckbegrenzungsventils ausgebildet sein und/oder wenigstens ein, insbesondere einstellbares, Druckbegrenzungsventil umfassen. Ferner kann die Druckanpassungseinrichtung 45 alternativ oder zusätzlich wenigstens ein Relais und/oder eine, insbesondere fernbetätigte, Verstelleinrichtung aufweisen. Insbesondere ist die Druckanpassungseinrichtung 45 dazu eingerichtet, den aus dem Leitungssystem 44 und/oder der Druckquelle 43 zugeleiteten Druck anzupassen und/oder zu begrenzen. Die Anpassung und/oder Begrenzung kann dabei je nach Ausführung automatisch oder manuell, insbesondere in Abhängigkeit des Betriebszustandes des Arbeitsgeräts 1 und/oder des Beladungszustandes des Arbeitsgeräts 1 und/oder der Last A, insbesondere Aufstandskraft, erfolgen. Ferner kann alternativ oder zusätzlich auch eine, insbesondere mit Druck beaufschlagte, Betätigungsleitung 440 zum Einstellen und/oder Anpassen und/oder Begrenzen eines definierten Drucks an der Druckanpassungseinrichtung 45 vorgesehen sein.

Alternativ oder zusätzlich kann wenigstens eine weitere und/oder andere Druckanpassungseinrichtung den äußeren Rad- und/oder Walzenelementen 21, 22 zugeordnet und/oder vorgeschaltet sein, welche insbesondere dazu eingerichtet ist, den für die Bremseinrichtungen 210, 220 der äußeren Rad- und/oder Walzenelemente 21, 22 vorgesehenen Druck einzustellen und/oder anzupassen und/oder zu begrenzen.

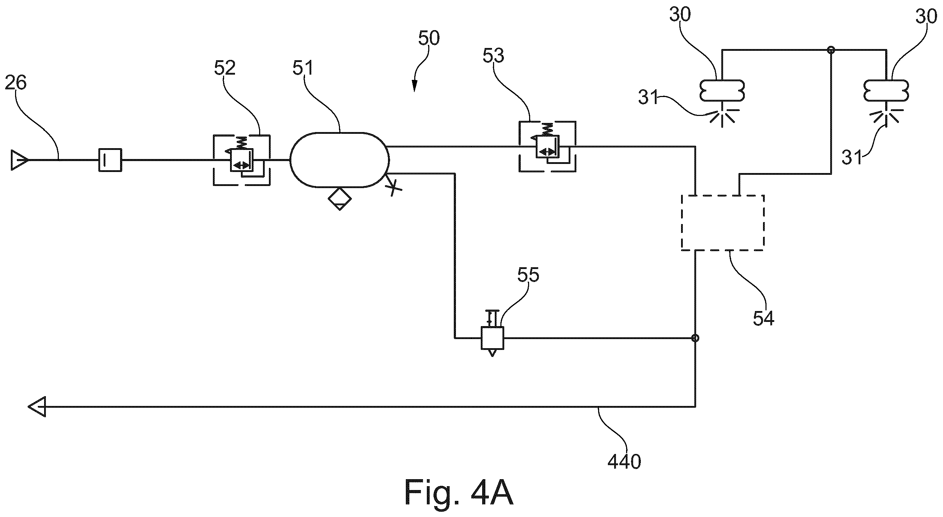

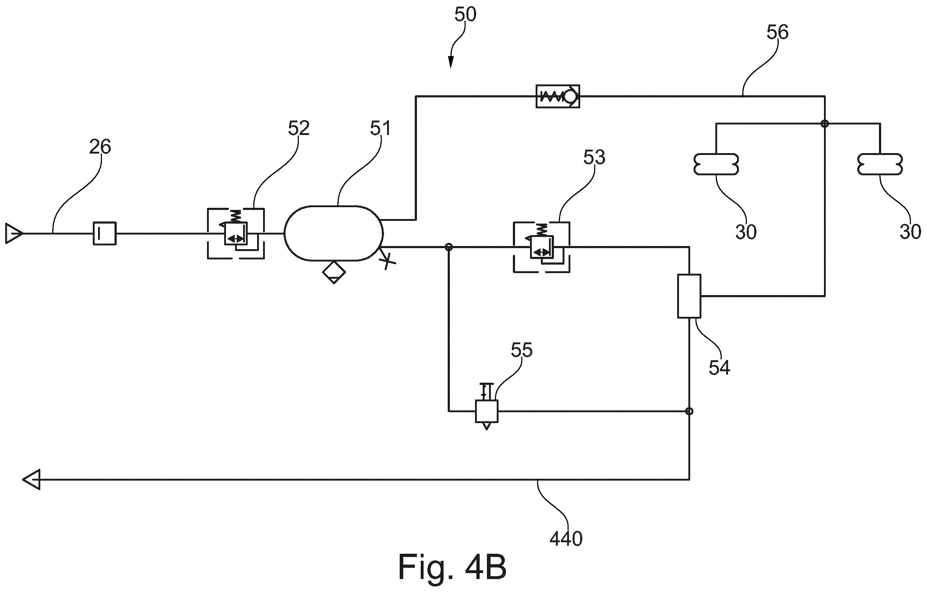

Aus der Zusammenschau der Figur 3 mit wenigstens einer der nachfolgend beschriebenen Figuren 4A und 4B ist ersichtlich, dass erfindungsgemäß die eine oder mehreren Feder- und/oder Stelleinrichtungen 30 in fluidleitender Weise mit dem wenigstens einen Bremskreis 40 koppelbar sind.

Die Figur 4A zeigt hierbei ein erstes Ausführungsbeispiel, wie die eine oder mehreren Feder- und/oder Stelleinrichtungen 30 mit dem, insbesondere in der Figur 3 beschriebenen und gezeigten, Bremskreis 40 koppelbar und/oder verbindbar und/oder verbunden sind. Hierbei ist vorgesehen, dass von der Druckquelle 43 des Bremskreises 40 in der Figur 3 wenigstens eine Versorgungsleitung 26 abzweigt und/oder ausmündet und in wenigstens ein zweites mit Druck beaufschlagtes Leitungssystem 50, welches in der Figur 4A gezeigt ist, übergeht und/oder einmündet. Insbesondere ist vorgesehen, dass das zweite Leitungssystem 50 mittels der wenigstens einen Versorgungsleitung 26 mit dem Bremskreis 40, insbesondere der Druckquelle 43, verbindbar und/oder verbunden ist. Das zweite Leitungssystem 50 kann alternativ oder zusätzlich wie gezeigt, wenigstens eine weitere und/oder zweite Druckquelle 51 umfassen, welche hier beispielhaft als ein Druckspeicher ausgebildetes Reservoir ausgeführt ist. Ferner kann der wenigstens einen weiteren und/oder zweiten Druckquelle 51, wie hier gezeigt, zumindest eine weitere oder dritte Druckanpassungseinrichtung 52 vorgeschaltet und/oder zumindest eine weitere oder vierte Druckanpassungseinrichtung 53 nachgeschaltet sein. Die Druckanpassungseinrichtungen 52, 53 sind hierbei beispielhaft nach Art von Druckbegrenzungsventilen ausgebildet.

Es sei hierbei explizit erwähnt, dass das zweite Leitungssystem 50 über die Versorgungsleitung 26 auch an einer beliebig anderen Stelle des Bremskreises 40 gekoppelt und/oder verbunden sein kann. Beispielsweise kann die Versorgungsleitung 26 alternativ oder zusätzlich zwischen der Druckquelle 43 und dem Anhängerbremsventil 42 und/oder entlang des ersten Leitungssystem 44 abzweigen. Ferner kann auch vorgesehen sein, dass die Versorgungsleitung 26 alternativ oder zusätzlich in fluidleitender Weise mit der Druckanpassungseinrichtung 45 verbindbar und/oder verbunden ist.

Zwischen der weiteren und/oder zweiten Druckquelle 51 und der einen oder den mehreren Feder- und/oder Stelleinrichtungen 30 (hier beispielhaft zwei) ist ferner ein optionales Druckumschaltventil 54 angeordnet. Das Druckumschaltventil 54 ist hierbei dazu eingerichtet, die Feder- und/oder Stelleinrichtungen 30, insbesondere je nach Betriebsstellung und/oder Beladungszustand des Arbeitsgeräts 1, mit unterschiedlichen Drücke zu beaufschlagen. Das Druckumschaltventil 54 weist eingangsseitig ein oder mehrere (hier zwei) Eingänge und wenigstens einen Ausgang auf, wobei das Druckumschaltventil 54 eingangsseitig hier über einen ersten Eingang und mittels der vierten Druckanpassungseinrichtung 53 mit dem Bremskreis 40 und/oder der Druckquelle 43 des Bremskreises 40 und/oder mit der weiteren oder zweiten Druckquelle 51 des zweiten Leitungssystems 50 verbindbar und/oder verbunden ist. Alternativ oder zusätzlich ist das Druckumschaltventil 54 eingangsseitig hier über einen zweiten Eingang mittels eines, insbesondere handbetätigten, Betätigungsventils 55 mit dem Bremskreis 40 und/oder der Druckquelle 43 des Bremskreises 40 und/oder mit der weiteren oder zweiten Druckquelle 51 des zweiten Leitungssystems 50 verbindbar und/oder verbunden. Ferner ist der zweite Eingang oder ein alternativer oder zusätzlicher hier jedoch nicht gezeigter dritter Eingang des Druckumschaltventils 54 mit der Betätigungsleitung 440 des Bremskreises 40 oder einer anderen (hier nicht gezeigten) Betätigungsleitung verbindbar und/oder verbunden. Insbesondere ist hierbei vorgesehen, dass die Feder- und/oder Stelleinrichtungen 30 je nach Betriebsstellung des Arbeitsgeräts 1 und/oder des Beladungszustandes des Arbeitsgeräts 1 und/oder Last A, insbesondere Aufstandskraft, über die unterschiedlichen Eingänge des Druckumschaltventils 54 mit Druck, insbesondere Fluid, versorgt und/oder beaufschlagt werden. Ferner kann hierbei insbesondere vorgesehen sein, dass der über den ersten Eingang des Druckumschaltventils 54 zuleitbare Druck niedriger ist als der über den zweiten Eingang des Druckumschaltventils 54 zuleitbare Druck. Des Weiteren kann vorgesehen sein, dass der über den ersten Eingang des Druckumschaltventils 54 zuleitbare Druck einer ersten Betriebsstellung des Arbeitsgeräts 1 und/oder einem ersten Beladungszustand des Arbeitsgeräts 1 und/oder einer ersten Last A, insbesondere Aufstandskraft, zugeordnet ist. Ferner kann alternativ oder zusätzlich vorgesehen sein, dass der über den zweiten Eingang des Druckumschaltventils 54 zuleitbare Druck einer zweiten Betriebsstellung des Arbeitsgeräts 1 und/oder einem zweiten Beladungszustand des Arbeitsgeräts 1 und/oder einer zweiten Last A, insbesondere Aufstandskraft, zugeordnet ist. Das Druckumschaltventil 54 und/oder dessen Eingänge können dabei ferner automatisch und/oder manuell umschaltbar sein. Alternativ dazu kann das Druckumschaltventil 54 auch nur einen Eingang oder mehr als zwei Eingänge umfassen.

Wie außerdem zu erkennen, weisen die Feder- und/oder Stelleinrichtungen 30 jeweils wenigstens einen Auslass 31 auf, über welchen der fluidische Druck, insbesondere das Fluid, aus den Feder- und/oder Stelleinrichtungen 30 zumindest teilweise und zumindest nahezu unmittelbar in die Umgebung ausleitbar und/oder ablassbar ist. Alternativ oder zusätzlich kann auch wenigstens ein Auslass 31 in der Leitung zwischen den Feder- und/oder Stelleinrichtungen 30 vorgesehen sein.

Die Figur 4B zeigt ein zweites Ausführungsbeispiel, wie die eine oder mehreren Feder- und/oder Stelleinrichtungen 30 mit dem, insbesondere in der Figur 3 beschriebenen und gezeigten, Bremskreis 40 verbindbar und/oder verbunden sind.

Da das erste und zweite Ausführungsbeispiel im Aufbau im Wesentlichen übereinstimmend sind, wird nachfolgend der Einfachheit und Kürze halber nur auf die Unterschiede eingegangen.

Wie auf der rechten Seite des in der Figur 4B gezeigten Schaltplans gut zu erkennen ist, ist den Feder- und/oder Stelleinrichtungen 30, insbesondere anstelle des Auslasses 31, wenigstens ein fluidischer Rücklauf bzw. wenigstens eine fluidische Rücklaufleitung 56 zugeordnet, über welche der fluidische Druck, insbesondere das Fluid, aus den Feder- und/oder Stelleinrichtungen 30 zumindest teilweise in Richtung des wenigstens einen Bremskreises 40, insbesondere der Druckquelle 43, 51, zurückleitbar ist. Alternativ oder zusätzlich dazu kann wenigstens eine der Feder- und/oder Stelleinrichtungen 30 wenigstens einen Auslass 31 gemäß des Ausführungsbeispiels in Figur 4A aufweisen.

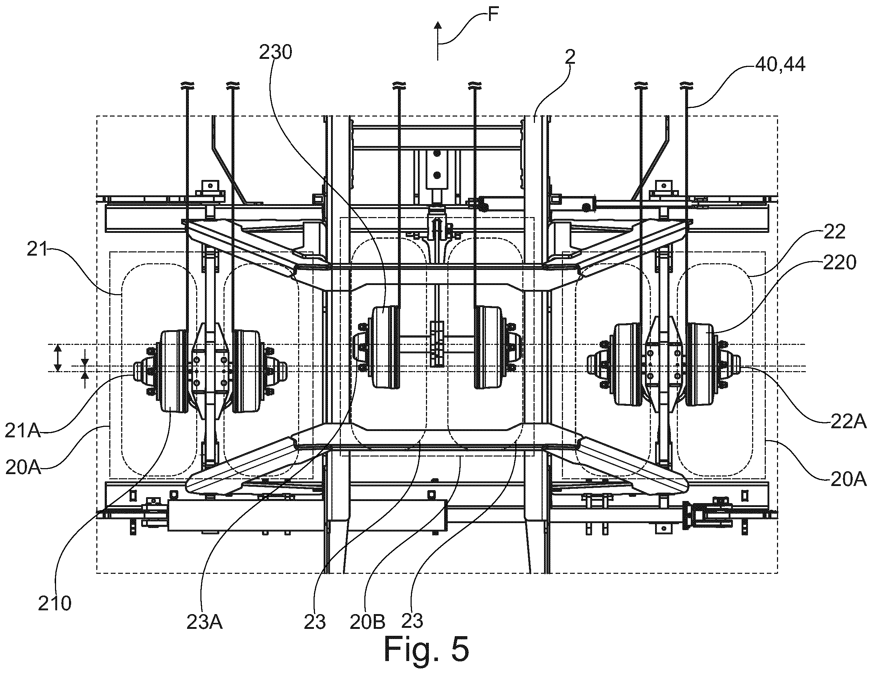

Mit Blick auf die Figur 5 wird außerdem ein alternativer oder zusätzlicher Aufbau des Arbeitsgeräts 1 ersichtlich. Dabei ist zu erkennen, dass das Fahrwerk 20, wie in den vorherigen Figuren ebenfalls bereits angedeutet, alternativ oder zusätzlich unterteilt ist. Insbesondere ist dabei ein Hauptfahrwerk 20A, bestehend aus wenigstens zwei Hauptachsen 21A, 22A, an denen jeweils wenigstens eines der Rad- und/oder Walzenelemente 21, 22 angeordnet sind, vorgesehen. Die Hauptachsen 21A, 22A sind alternativ oder zusätzlich in Fahrtrichtung F versetzt zueinander angeordnet, beispielhaft zwischen 3 mm und 100 mm oder zwischen 5 mm bis 50 mm. Ferner ist insbesondere ein, hier mittig zwischen dem Hauptfahrwerk 20A und/oder den äußeren Rad- und/oder Walzenelementen 21, 22 angeordnetes, Hilfsfahrwerk 20B vorgesehen. Das Hilfsfahrwerk 20B umfasst eine zu den Hauptachsen 21A, 22A in Fahrtrichtung F versetzte Hilfsachse 23A, an welcher wenigstens eines der Rad- und/oder Walzenelemente 23 angeordnet ist. Insbesondere ist hierbei vorgesehen, dass die mittig angeordnete Hilfsachse 23A und die beiden Hauptachsen 21A, 22A gemeinsam drei Achslinien bilden. Darüber hinaus ist das Hilfsfahrwerk 20B und damit die mittlere Hilfsachse 23A relativ zum Rahmen 2 und/oder dem Hauptfahrwerk 20A gesehen, insbesondere mittels der hier beispielhaft nach Art einer Luftfederung ausgeführten und dem Hilfsfahrwerk 20B zugeordneten Feder- und/oder Stelleinrichtung 30, federbar bzw. gefedert ausgeführt. Demgegenüber ist das Hauptfahrwerk 20A, insbesondere die äußeren Rad- und/oder Walzenelemente 21, 22 und/oder die Hauptachsen 21A, 22A, zumindest nahezu starr und/oder ungefedert innerhalb des Arbeitsgeräts 1, insbesondere am Rahmen 2, angeordnet.

Darüber hinaus sind außerdem die fluidisch beaufschlagbaren und/oder beaufschlagten Bremseinrichtungen 210-230 zu erkennen, welche an den jeweiligen Rad- und/oder Walzenelementen 21-23, insbesondere an den Hauptachsen 21A, 22A und der Hilfsachse 23A, angeordnet sind. Ebenso sind auch einzelne Leitungsabschnitte des Bremskreises 40, insbesondere des Leitungssystems 44, angedeutet. Des Weiteren ist hierbei insbesondere vorgesehen, dass sich die Bremskräfte der dem Hauptfahrwerk 20A zugeordneten ersten Bremseinrichtungen 210, 220 von denen der dem Hilfsfahrwerk 20B zugeordneten zweiten Bremseinrichtungen 230 zumindest in einer Betriebsstellung und/oder je nach Beladungszustand des Arbeitsgeräts 1 und/oder je nach der übertragbaren Last A unterscheiden.

Ferner ist alternativ oder zusätzlich vorgesehen, dass sich insbesondere die übertragbaren Lasten A, insbesondere Aufstandskräfte, des Hauptfahrwerks 20A von denen des Hilfsfahrwerks 20B unterscheiden. Alternativ oder zusätzlich ist die vom Hilfsfahrwerk 20B übertragbare Last A, insbesondere Aufstandskraft, derart anpassbar, dass die vom Hauptfahrwerk 20A übertragbaren Lasten in den unterschiedlichen Betriebsstellungen und/oder Beladungszuständen zumindest im Wesentlichen konstant sind. Mit anderen Worten ist die über das Hauptfahrwerk 20A übertragbare Last in den unterschiedlichen Betriebssituationen zumindest im Wesentlichen gleich, während sich die Last A am Hilfsfahrwerk 20B je nach Betriebssituation verändert und/oder angepasst wird.

Ferner kann alternativ oder zusätzlich auch vorgesehen sein, dass mittels der Feder- und/oder Stelleinrichtung 30 eine Höhe und/oder Schwenklage des Hilfsfahrwerks 20B anpassbar ist. Beispielsweise um einen Abstand des Rahmens 2 gegenüber dem Untergrund anzupassen und/oder Unebenheiten entlang des Untergrunds auszugleichen.

Alternativ oder zusätzlich kann die Höhe und/oder Schwenklage des Fahrwerks 20, insbesondere des Hilfsfahrwerks 20B und/oder wenigstens ein dem Hilfsfahrwerk 20B zugeordnetes Rad- und/oder Walzenelement 23, mittels wenigstens einer in den Figuren nicht gezeigten Begrenzungseinrichtung relativ zum Untergrund und/oder dem Rahmen 2 des Arbeitsgeräts 1 begrenzt sein. Die wenigstens eine Begrenzungseinrichtung kann dabei insbesondere zumindest einen ersten Anschlag, insbesondere Obenanschlag für eine maximale Höhe und/oder maximale Schwenklage, und/oder einen zweiten Anschlag, insbesondere Untenanschlag für eine minimale Höhe und/oder minimale Schwenklage, umfassen.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

### Bezugszeichenliste

- 1: Landwirtschaftliche Arbeitsgerät
- 2: Rahmen
- 10: Behälter
- 20: Fahrwerk
- 20A: Hauptfahrwerk
- 20B: Hilfsfahrwerk
- 200: Bodenwalze
- 21-24: Rad- und/oder Walzenelemente
- 21A, 22A: Hauptachsen
- 210-230: Bremseinrichtungen
- 23A: Hilfsachse
- 26: Versorgungsleitung
- 30: Feder- und/oder Stelleinrichtung
- 31: Auslass
- 40: Bremskreis
- 41A, 41B: Kupplungen
- 42: Anhängerbremsventil
- 43: Druckquelle
- 44: Leitungssystem
- 440: Betätigungsleitung
- 45: Druckanpassungseinrichtung
- 50: Leitungssystem
- 51: Druckquelle
- 52, 53: Druckanpassungseinrichtungen
- 54: Druckumschaltventil
- 55: Betätigungsventil
- 56: Rücklaufleitung

- A: Last
- F: Fahrtrichtung

## Patentansprüche

1. Landwirtschaftliches Arbeitsgerät (1), umfassend wenigstens ein Fahrwerk (20), mittels welchem das Arbeitsgerät (1) in unterschiedlichen Betriebsstellungen und in abrollbarer Weise auf einem Untergrund wie einer Straße und einer landwirtschaftlichen Nutzfläche, insbesondere einem Acker, bewegbar und/oder abgestützt ist, wobei dem Fahrwerk (20) wenigstens ein mit fluidischen Druck, insbesondere einem Fluid, beaufschlagbarer Bremskreis (40) zugeordnet ist, mittels welchem wenigstens ein von mehreren dem Fahrwerk (20) zugeordneten Rad- und/oder Walzenelementen (21-24) abbremsbar sind, und wobei dem Fahrwerk (20) ein oder mehrere Feder- und/oder Stelleinrichtungen (30) zugeordnet sind, mittels welcher oder welchen eine über das Fahrwerk (20), insbesondere über wenigstens ein Rad- und/oder Walzenelement (21-24), auf den Untergrund übertragbare Last (A), insbesondere Aufstandskraft, einstellbar und/oder anpassbar ist, **dadurch gekennzeichnet, dass** die eine oder mehreren Feder- und/oder Stelleinrichtungen (30) in fluidleitender Weise mit dem wenigstens einen Bremskreis (40) koppelbar sind.

2. Arbeitsgerät (1) nach Anspruch 1, **dadurch gekennzeichnet, dass** die eine oder mehreren Feder- und/oder Stelleinrichtungen (30) gegenüber dem wenigstens einen Bremskreis (40) mit dem gleichen oder einem anderen fluidischen Druck, insbesondere Fluid, beaufschlagbar sind.

3. Arbeitsgerät (1) nach Anspruch 2, **dadurch gekennzeichnet, dass** die eine oder mehreren Feder- und/oder Stelleinrichtungen (30) wenigstens einen Auslass (31) aufweisen, über welchen der fluidische Druck, insbesondere das Fluid, aus der einen oder den mehreren Feder- und/oder Stelleinrichtungen (30) zumindest teilweise und zumindest nahezu unmittelbar in die Umgebung ausleitbar und/oder ablassbar ist.

4. Arbeitsgerät (1) nach zumindest einem der vorgenannten Ansprüche 2 oder 3, **dadurch gekennzeichnet, dass** die eine oder mehreren Feder- und/oder Stelleinrichtungen (30) wenigstens einen fluidischen Rücklauf aufweisen, über welchen der fluidische Druck, insbesondere das Fluid, aus der einen oder den mehreren Feder- und/oder Stelleinrichtungen (30) zumindest teilweise in Richtung des wenigstens einen Bremskreises (40), insbesondere einer gemeinsamen Druckquelle (40, 51) und/oder einem Reservoir, zurückleitbar ist.

5. Arbeitsgerät (1) nach zumindest einem der vorgenannten Ansprüche 2 bis 4, **dadurch gekennzeichnet, dass** der einen oder den mehreren Feder- und/oder Stelleinrichtungen (30) wenigstens eine Druckanpassungseinrichtung, insbesondere ein Druckbegrenzungsventil, vorgeschaltet oder nachgeschaltet ist, mittels welcher der fluidische Druck in der einen oder den mehreren Feder- und/oder Stelleinrichtungen (30) anpassbar, vorzugsweise begrenzbar, ist.

6. Arbeitsgerät (1) nach zumindest einem der vorgenannten Ansprüche, **dadurch gekennzeichnet, dass** vor und/oder innerhalb des wenigstens einen Bremskreises (40) wenigstens eine weitere oder andere Druckanpassungseinrichtung (45, 52, 53), insbesondere Druckbegrenzungsventil, angeordnet ist, mittels welcher der fluidische Druck im wenigstens einen Bremskreis (40) anpassbar, vorzugsweise begrenzbar, ist.

7. Arbeitsgerät (1) nach zumindest einem der vorgenannten Ansprüche 2 bis 6, **dadurch gekennzeichnet, dass** der fluidische Druck, insbesondere im wenigstens einen Bremskreis (40) und/oder der einen oder den mehreren Feder- und/oder Stelleinrichtungen (30), in Abhängigkeit der Betriebsstellung und/oder eines Beladungszustandes des Arbeitsgeräts (1) einstellbar und/oder anpassbar ist.

8. Arbeitsgerät (1) nach zumindest einem der vorgenannten Ansprüche, **dadurch gekennzeichnet, dass** die eine oder die mehreren Feder- und/oder Stelleinrichtungen (30) nach Art eines Federbalges, vorzugsweise Luftfederbalges, ausgebildet sind.

9. Arbeitsgerät (1) nach zumindest einem der vorgenannten Ansprüche, **dadurch gekennzeichnet, dass** das Fahrwerk (20) unterteilt ist in:
- wenigstens ein Hauptfahrwerk (20A), bestehend aus wenigstens zwei, vorzugsweise zueinander in Fahrtrichtung (F) versetzten, Hauptachsen (21A, 22A), an denen jeweils wenigstens eines der Rad- und/oder Walzenelemente (21-24) angeordnet ist; und
- wenigstens ein Hilfsfahrwerk (20B), bestehend aus wenigstens einer, vorzugsweise zu den Hauptachsen (21A, 22A) in Fahrtrichtung (F) versetzten Hilfsachse (23A), an welcher wenigstens eines der Rad- und/oder Walzenelemente (21-24) angeordnet ist.

10. Arbeitsgerät (1) nach Anspruch 9, **dadurch gekennzeichnet, dass** wenigstens einem Rad- und/oder Walzenelement (21-24), insbesondere des Hauptfahrwerks (20A), zumindest eine erste Bremseinrichtung und wenigstens einem anderen Rad- und/oder Walzenelement (21-24), insbesondere des Hilfsfahrwerks (20B), zumindest eine zweite Bremseinrichtung zugeordnet ist, wobei die erste und zweite Bremseinrichtung dazu eingerichtet sind, eine definierte und vom fluidischen Druck, insbesondere Fluid, im wenigstens einen Bremskreis (40) abhängige Bremskraft in die jeweiligen Rad- und/oder Walzenelemente (21-24), insbesondere deren Achsen, einzuleiten und/oder zu beaufschlagen.

11. Arbeitsgerät (1) nach Anspruch 10, **dadurch gekennzeichnet, dass** sich die Bremskräfte der ersten und zweiten Bremseinrichtung, vorzugsweise in wenigstens einer der mehreren Betriebsstellungen und/oder in Abhängigkeit des Beladungszustandes des Arbeitsgeräts (1), unterscheiden.

12. Arbeitsgerät (1) nach zumindest einem der vorgenannten Ansprüche 9 bis 11, **dadurch gekennzeichnet, dass** sich die übertragbaren Lasten (A), insbesondere Aufstandskräfte, des Hauptfahrwerks (20A) und Hilfsfahrwerks (20B) vorzugsweise in wenigstens einer der mehreren Betriebsstellungen und/oder vorzugsweise in Abhängigkeit des Beladungszustandes des Arbeitsgeräts (1), unterscheiden.

13. Arbeitsgerät (1) nach Anspruch 12, **dadurch gekennzeichnet, dass** die Bremskraft des Hilfsfahrwerks (20B) in Abhängigkeit der übertragbaren Lasten (A), insbesondere Aufstandskräfte, des Hilfsfahrwerks (20B) einstellbar und/oder anpassbar ist.

14. Arbeitsgerät (1) nach zumindest einem der vorgenannten Ansprüche, **dadurch gekennzeichnet, dass** eine Höhe und/oder Schwenklage des Fahrwerks (20), vorzugsweise des Hilfsfahrwerks (20B), und besonders vorzugsweise in fernbetätigter Weise, mittels der einen oder mehreren Feder- und/oder Stelleinrichtungen (30) anpassbar ist.

15. Arbeitsgerät (1) nach zumindest einem der vorgenannten Ansprüche, **dadurch gekennzeichnet, dass** die Rad- und/oder Walzenelemente (21-24) in einer ausgeklappten und/oder abgesenkten Betriebsstellung, insbesondere Arbeitsstellung, des Arbeitsgeräts (1) und für die Verwendung auf einer Nutzfläche, insbesondere einem Acker, quer zur Fahrtrichtung (F) und zumindest im Wesentlichen nebeneinander derart angeordnet sind, dass die Rad- und/oder Walzenelemente (21-24) ein Bodenbearbeitungsgerät, insbesondere eine Bodenwalze nach Art eines Reifenpackers, bilden.
